# EUROPEAN PATENT SPECIFICATION

(11) **EP 4 196 408 B1**
(45) Date of publication and mention of the grant of the patent: **18.02.2026**
(21) Application number: 21778189.7
(22) Date of filing: 12.08.2021
(51) Int. Cl.: B65D 71/40

(54) **IMPROVEMENTS IN OR RELATING TO CONTAINER CARRIERS**
VERBESSERUNGEN AN ODER IM ZUSAMMENHANG MIT BEHÄLTERTRÄGERN
AMÉLIORATIONS APPORTÉES OU SE RAPPORTANT À DES SUPPORTS DE CONTENANTS

(30) Priority: 12.08.2020 GB 202012581
(43) Date of publication of application: 21.06.2023
(73) Proprietor: British Polythene Limited, Rushden, Northamptonshire NN10 6FB (GB)
(72) Inventor: BATES, Stephen, Reading Berkshire RG6 4HX (GB)
(74) Representative: Bryers Intellectual Property Ltd
(86) International application number: PCT/GB2021/052092
(87) International publication number: WO 2022/034328

(56) References cited:
- WO-A1-96/19393
- US-A- 3 488 911
- US-A- 5 485 914
- US-A- 5 487 464

## Description

The present invention relates generally to container carriers and particularly, although not exclusively to clip-type carriers for securely retaining containers together, and to machines, methods and systems for applying container carriers to containers.

It is well known to package containers together using a carrier. Such carriers (sometimes referred to as "carrier stock") are often formed from a plastics film with a plurality of apertures, for example as described in US2874835, US4250682 and US2936070.

Another type of carrier is known as a clip-type carrier, in which a sheet of flexible material engages the underside of a flange/rim of an article such as a can or bottle. WO 96/19393 A1 discloses a carrier in combination with a plurality of packaging articles according to the preamble of independent claim 1.

The present invention seeks to provide improvements in or relating to carriers.

An aspect of the present invention provides a carrier in combination with a plurality of packaging articles in accordance with independent claim 1. Preferred embodiments are defined in the dependent claims.

The present invention will now be more particularly described, by way of example, with reference to the accompanying drawings.

The example embodiments are described in sufficient detail to enable those of ordinary skill in the art to embody and implement the systems and processes herein described. It is important to understand that embodiments can be provided in many alternative forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In the following description, all orientational terms, such as upper, lower, radially and axially, are used in relation to the drawings and should not be interpreted as limiting on the invention.

Figure I shows a clip-type carrier generally indicated 10.

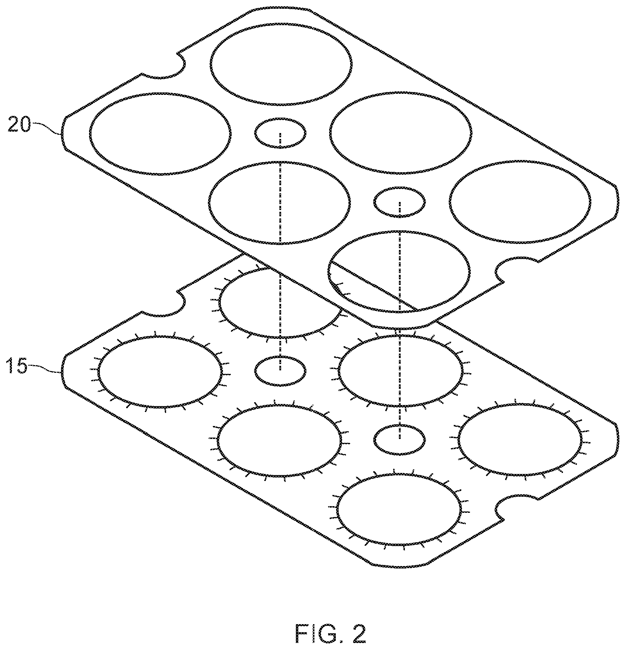

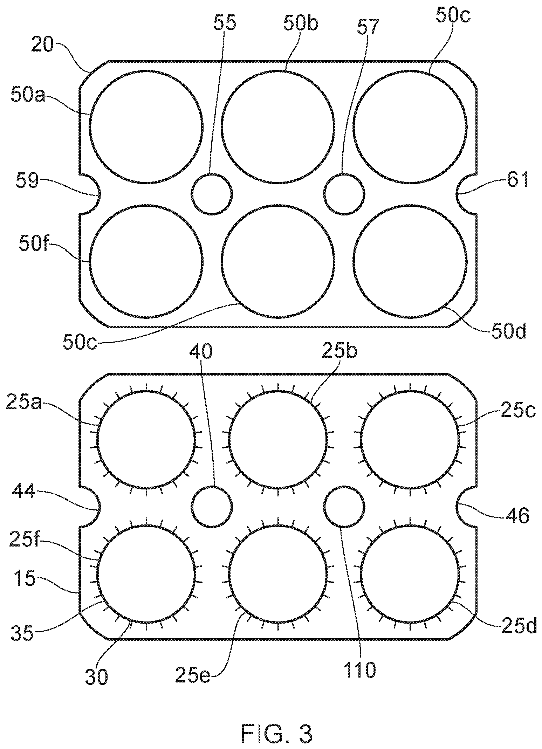

As shown in Figures 2 and 3 the carrier is formed from first, upper layer 20 and a second, lower layer 15. The layers 15, 20 have approximately the same generally rectangular outline shape.

The lower layer 15 is formed with six retaining apertures 25a-f, provided in two parallel rows of three. Each of the apertures 25a-f is generally circular and at their periphery have a plurality of radially extending slits 30 which define a plurality of retaining lugs 35.

Along the centre of the layer 15 are two generally circular holes 40, 42, used both as finger holes and also to manipulate the carrier during application. It will be noted that at the ends of the carrier there are semi-circular holes 44, 46 because the carrier is formed in a continuous strip with other such carriers, so the holes at either end are bisected.

The upper layer 20 is formed with six apertures 50a-f, provided in two parallel rows of three and corresponding to respective apertures 25a-f of the first layer.

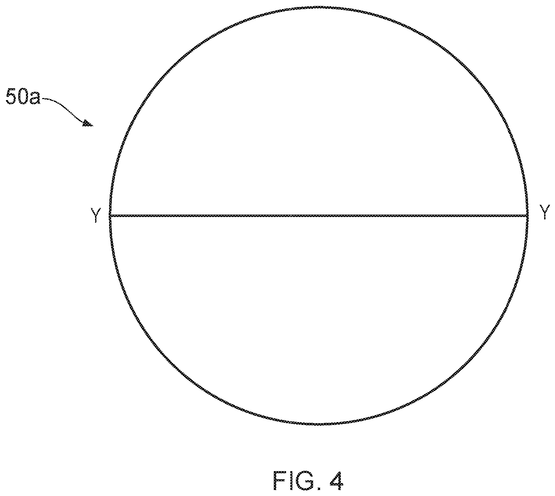

Referring also to Figure 4, each of the apertures (on 50a is shown) is generally elliptical. The major axis Y of the apertures is shown and runs parallel to the axis of carrier application X shown in Figure I. To aid understanding a notional circular aperture is shown in dotted lines.

Again corresponding to the first layer, along the centre of the layer 20 are two generally circular holes 55, 57 and the ends of the carrier also have semi-circular holes 59, 61.

The layers/sheets 15, 20 are formed separately and secured together, by gluing. The sheets cannot therefore move relative to each other.

The length of the slits in the apertures 25a-f means that they extend at least to the edge of the apertures 50a-f, as can be seen in Figure I.

Figure 5 shows a carrier 110 of the general type described in relation to Figure 1 to 4 and applied to six standard sized beverage cans 170.

It will be seen that the lugs 135 are deflected upwards and engage under the can end chimes 175. The lugs 135 are prevented from deformation by the presence of the apertures in the second layer, which effectively act like a collar.

Figure 6 illustrates a close-up of an aperture 250d with lugs 235 deflected upwards.

Figure 7A shows first and second layers 320, 315 of a carrier designed for "sleek cans" or "slim cans", having a smaller diameter than a standard can.

Unlike standard cans, sleek and slim cans typically do not include a pronounced frusto-conical upper portion below a chime (meaning that the diameter of the end is very similar to the diameter of the body; typically only slightly larger). As a result, with the cans fitted into a carrier and sitting close to each other, there is very little carrier material between them. In addition, it is often preferable to have no or only a very small overhang at the edges of the carrier or else they cannot be stacked together efficiently. The result is that there would be very little carrier material around the cans, which would increase the risk of the material tearing.

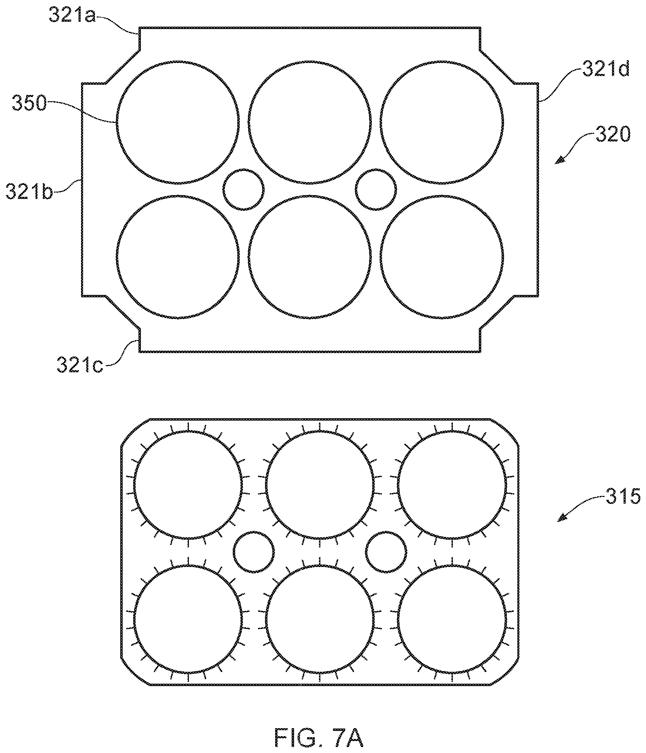

To address this potential problem, the carrier of Figure 7A provides additional material flaps 321a-d along each edge of the upper layer 320.

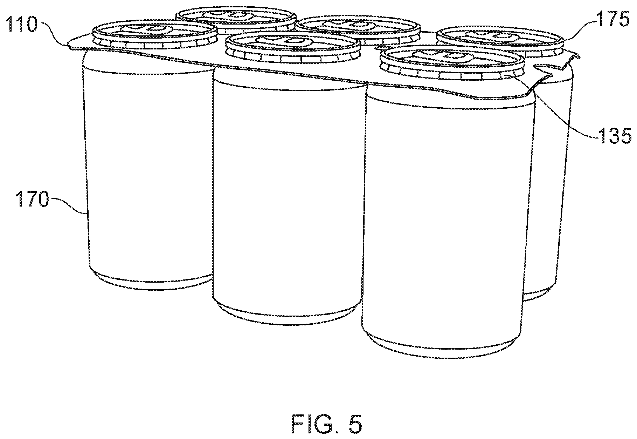

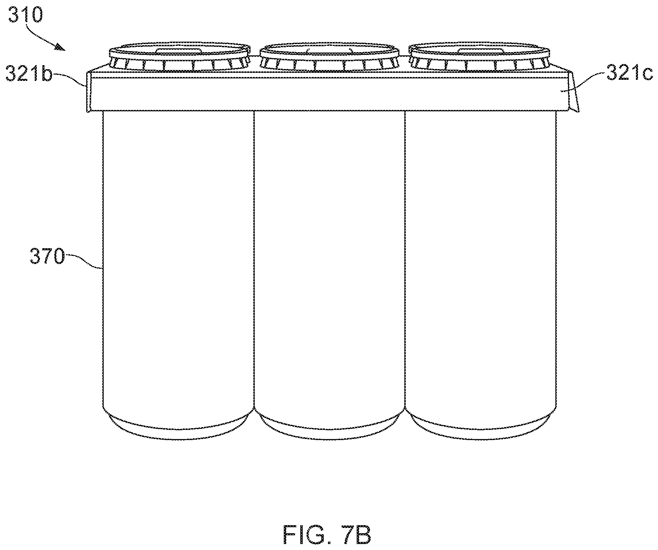

The principle of the carrier 31û formed from layers 320, 315 is generally the same as that for the carrier 110 described in relation to Figure 5, for example. A carrier 310 of this type is shown applied to six sleek beverage cans 370 in Figure 7B. The flaps 321 are folded down (by approximately 90 degrees) so that that lie generally flat against the side of the cans. In this carrier the flaps are folded during application; in other carriers the flaps may be pre-folded.

In this carrier the apertures 350 in the upper layer 320 are generally circular.

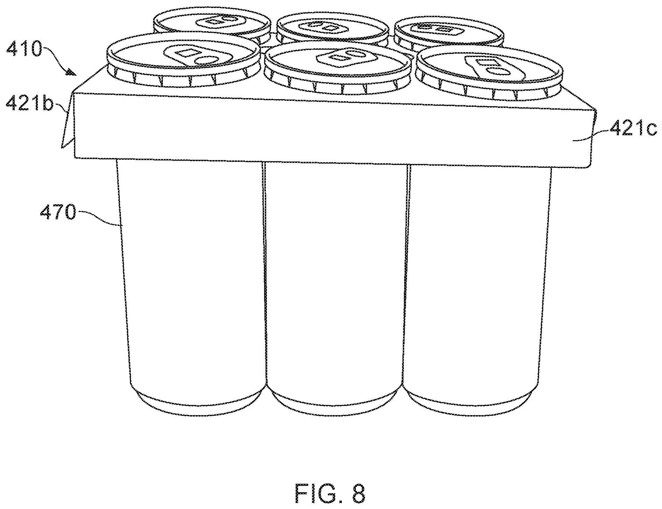

Figure 8 shows a carrier 410 applied to six slim can 470. The carrier 410 is similar to the carrier 310, with extra material flaps 421 provided along each edge.

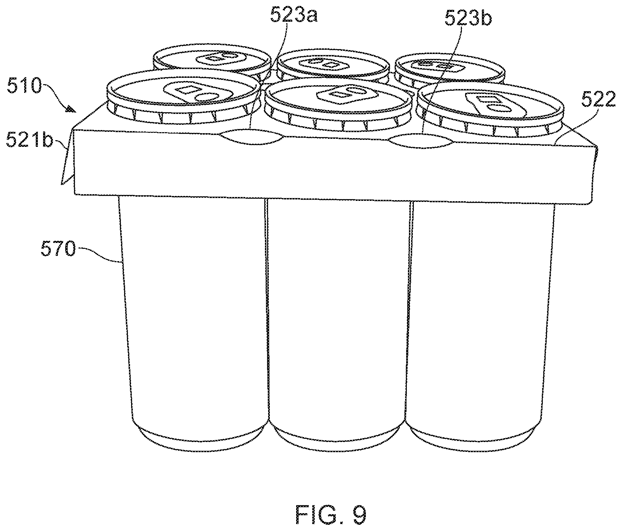

Figure 9 shows a carrier 510. The carrier 510 is similar to the carrier 410 and is shown applied to slim cans 570.

The folds which form the flaps are provided with tensioning means. The fold line 522 along which the upper layer is folded to form the flap includes two elongated elliptical shaped panels (reminiscent of a marquise shape) 523a, 523b. When the flap is folded the panels introduce tension into the fold line, which holds the flaps in position (i.e. prevents it from rising up / unfolding) and means that the flap is held alongside the cans.

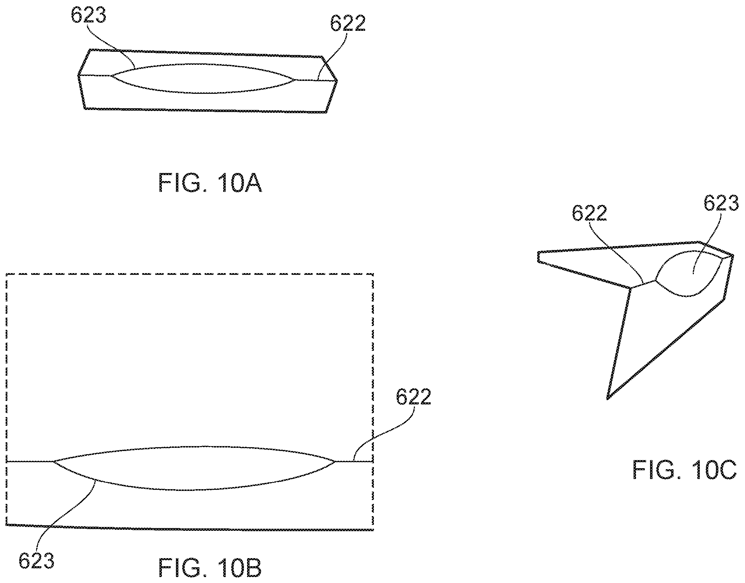

Figures 10Ato 10C illustrate a fold line 622 including an elongated elliptical panel 623. This places the fold line under tension and provides a stable folded configuration.

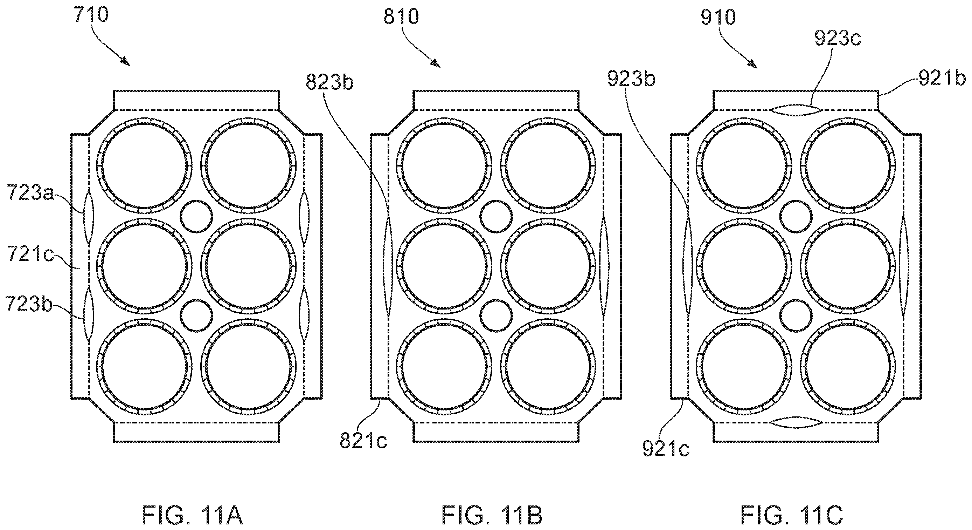

Figures 11A to 11C show carriers 710, 810, 910. The carrier 710 is generally rectangular and the flaps along the longer sides each have two spaced elliptical tensioning panels. The carrier 810 has a single elliptical panel along the fold line of each longer side flap. The carrier 910 has a single elliptical panel along the fold line of each longer side flap and a single elliptical panel forming part of the fold of each shorter side.

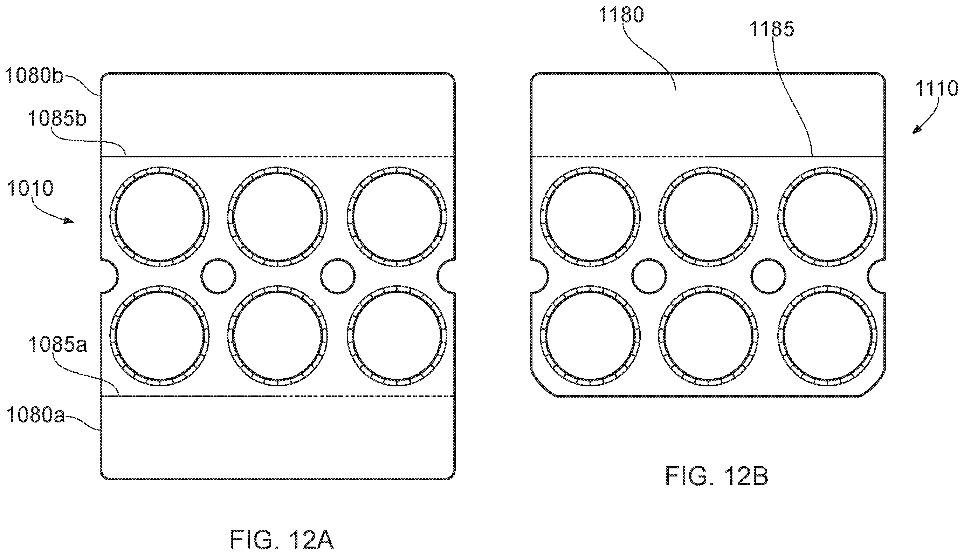

Figure 12A shows a carrier 1010.

The carrier 1010 is similar to the carriers 10 and 110. In this carrier the longer sides of the bottom layer are extended to form panels 1080a, 1080b, which could be used, for example, as a merchandising/advertising space. The carrier 1010 is folded along lines 1085a, 1085b to form the panels 1080a, 1080b.

The carrier 1110 of Figure 12B is similar to the carrier 1010 of Figure 12A, except that only one panel 1180 is provided.

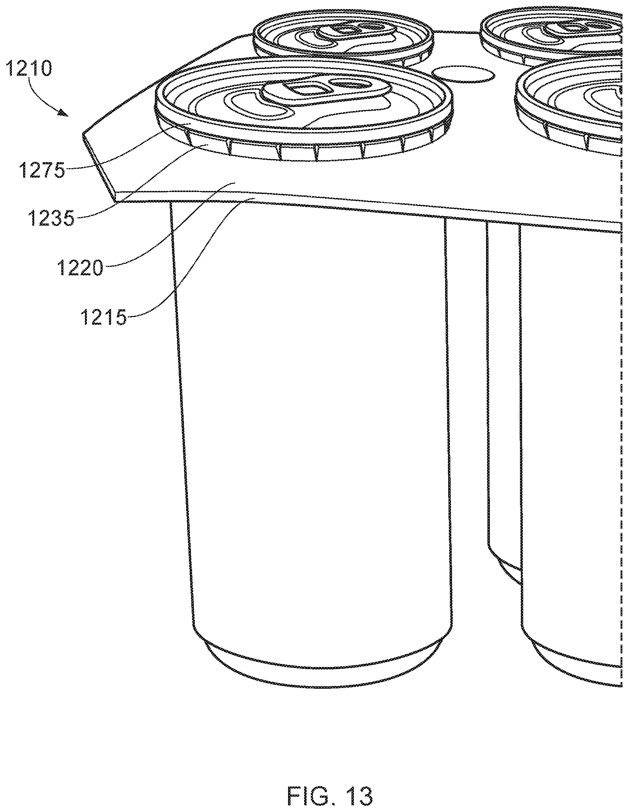

Figure 13 shows part of a carrier 1210 with lugs 1235 located under a can chime 1275.

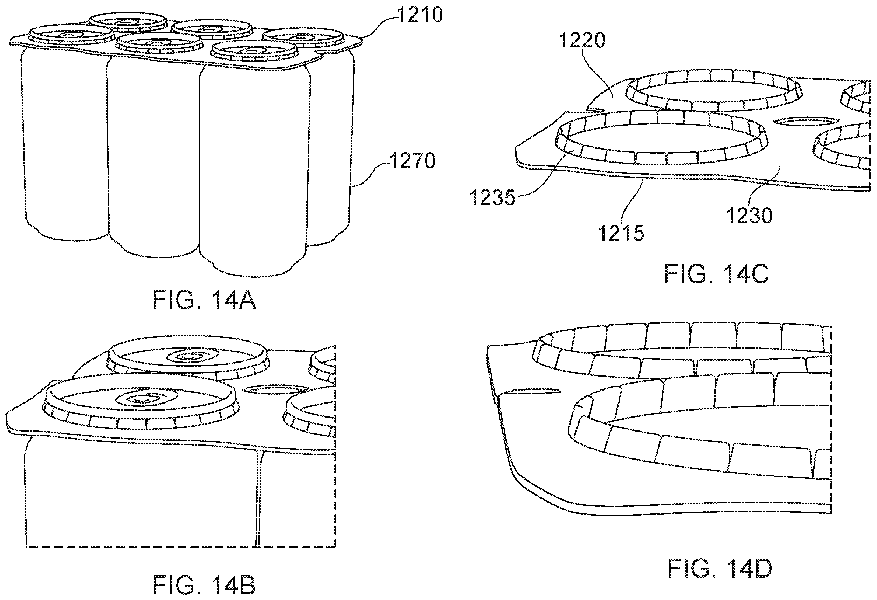

Figures 14A to 14D illustrate a carrier 1310 shown unitising a plurality of cans 1370.

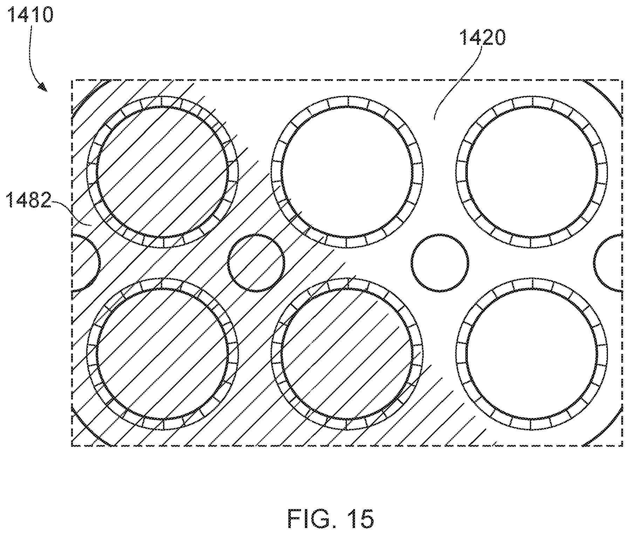

Figure 15 shows a carrier 1410.

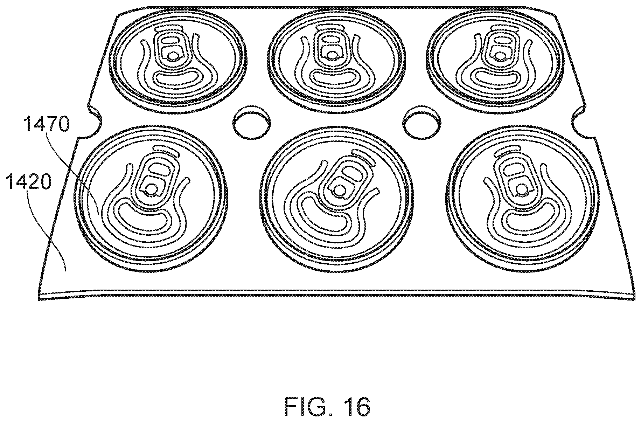

The carrier 1410 is similar to the carrier 10, 110. In this carrier a peelable film 1482 is provided and extends across the layer 1420. This means that when the carrier is applied (see Figure 16) the tops of the cans 1470 are protected. Because the film 1482 is peelable it can easily be removed from the cardboard carrier before recycling.

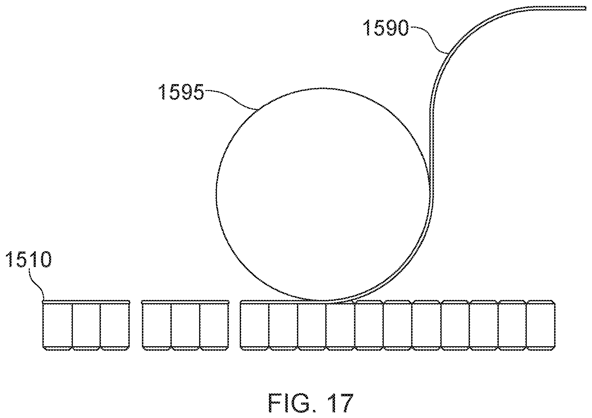

Figure 17 illustrates a method of applying clip-type carriers. The carriers 1510 are provided as a continuous strip 1590, which approach and move onto a rotary drum 1595. The drum may, for example, include posts which engage manipulation holes.

The drum 1595 causes the carriers to be rolled onto waiting sets of containers (as opposed, for example to pushing them down vertically from above).

To achieve the closest possible fit of the first layer in relation to the second layer in a roll-on system, elliptical apertures (with ellipticity in the application direction) may be used to facilitate "close fitting" whilst allowing clearance for the aperture to pass over the trailing edge of the container as it is applied.

The strip may, for example include perforations, embossed lines or the like to allow separation before, during or after application.

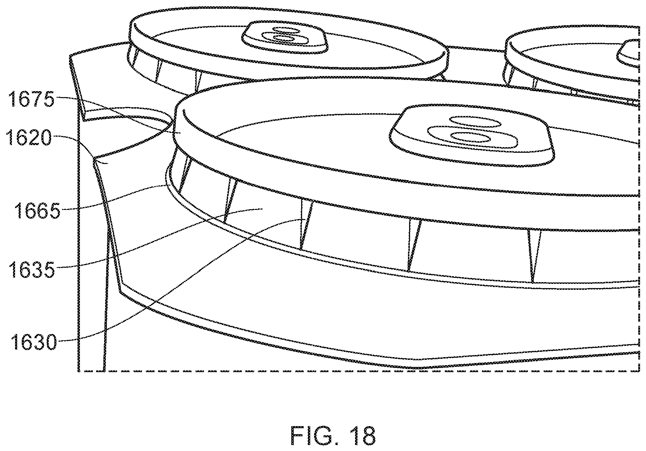

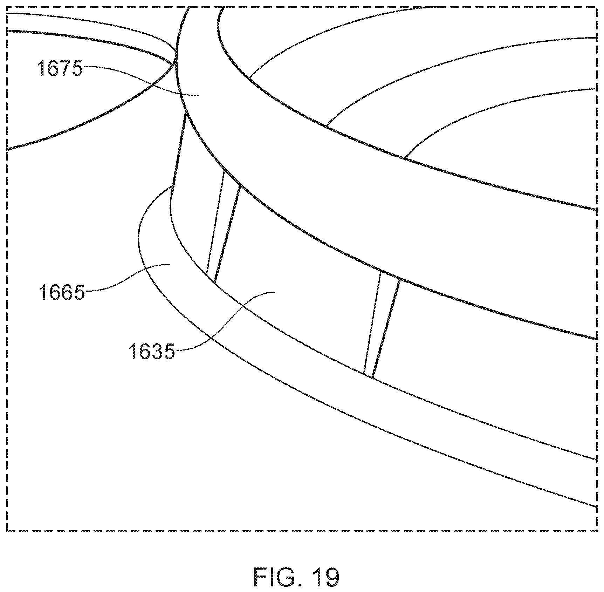

Figures 18 and 19 show a carrier formed according to the present invention. The carrier is formed from a lower layer 1615 and an upper layer 1620.

The lower layer 1615 is formed with six (in this embodiment) retaining apertures 1625, provided in two parallel rows of three. Each of the apertures 1625 is generally circular and at their periphery have a plurality of radially extending slits 1630 which define a plurality of retaining lugs 1635.

The upper layer 1620 is formed with apertures 1650 corresponding to respective apertures 1625 of the lower layer 1615.

The circular apertures 1650 are dimensioned using formula: D1 < D2 - 2T to result in formation of a ridge/crease/fillet 1665 when applied, which significantly improves retention.

The lugs 1635 are shown located under a can chime 1675.

Drop tests were carried out on the smaller diameter aperture in top layer of carrier. The drop tests were carried out on 6 x 500ml cans at a drop distance of approximately I".

These tests were performed on the standard 55mm diameter, smaller 54mm diameter and the 53.5mm diameter aperture carriers i.e. D1 + 2T > D2; DI + 2T = D2; and D1 + 2T < D2. For this test the top of the cans is approximately 54 mm diameter and the board thickness of a single layer is 0.35mm.

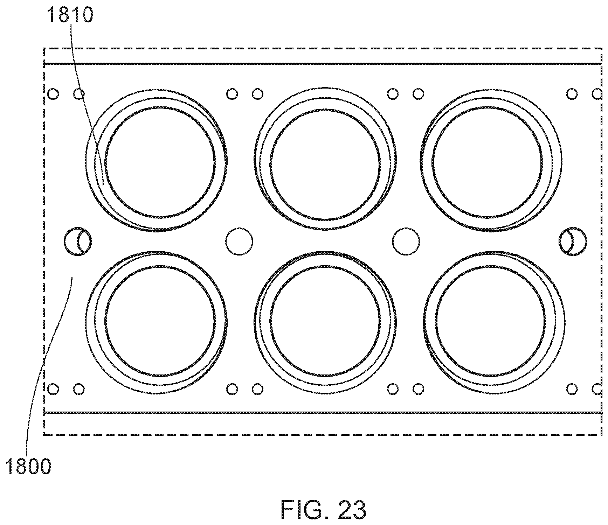

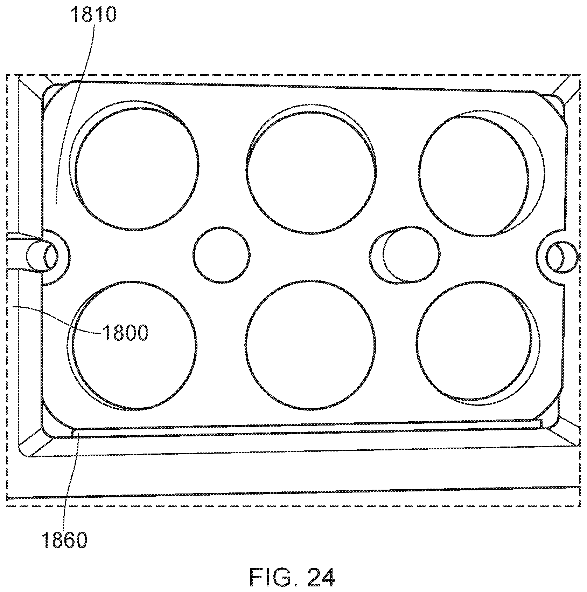

The reduction in the aperture diameter, 53.5mm combined with the board thickness of 2 x 0.35mm creates an aggregated aperture of only 52.8mm. This is an interference fit over the top of the cans and may require a precise method of application to prevent the non - stretchy cardboard from tearing (e.g. see Figures 23 and 24).

| Aperture diameter (mm) | Average number of drops |
|---|---|
| 55 | 7 |
| 54 | 9 |
| 53.5 | 25+ |

The results show a marked improvement in can retention. This is because how the pack works is fundamentally different.

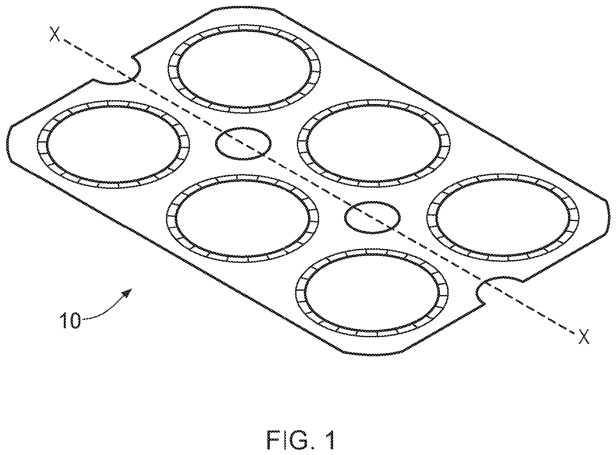

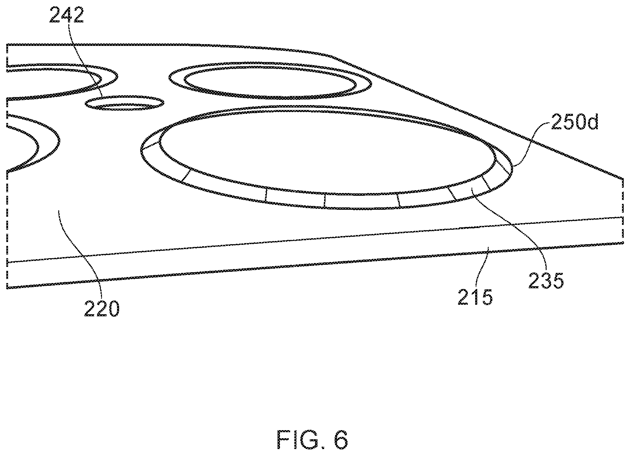

On the designs of Figures 1 to 16, for example, the top layer diameter supports the fingers of the lower diameter, helping to prevent them from bending and the pack failing. By reducing the diameter further, it has been found that the amount the fingers extend through the top aperture is reduced (for example approximately 1.9mm vs 2.75mm) as a result of the smaller diameter not sitting further down on the conical top of the can. It also creates a reinforcing bead around the fingers. These shorter fingers are less prone to deformation. The difference is in the interference fit of the carrier over the rim of the can. Once the finger deformation becomes critical they can no longer support the cans and pack failure results. On the smaller diameter "undersized" aperture version, due to the interference fit, the deforming fingers prevent the rim of the cans from passing through the carrier aperture. Therefore, in order for the pack to fail the carrier would need to tear. In effect, the revised design achieves a two-stage method of (can) retention.

The perception was that reducing the size of the apertures even further over the initial design, would have a detrimental effect to the pack itself. As there is no stretch available in the cartonboard material, it was suspected that the pack would split as had seen in previous tests. However, surprisingly the deformation and resultant "bead" that is created has improved pack performance as noted above.

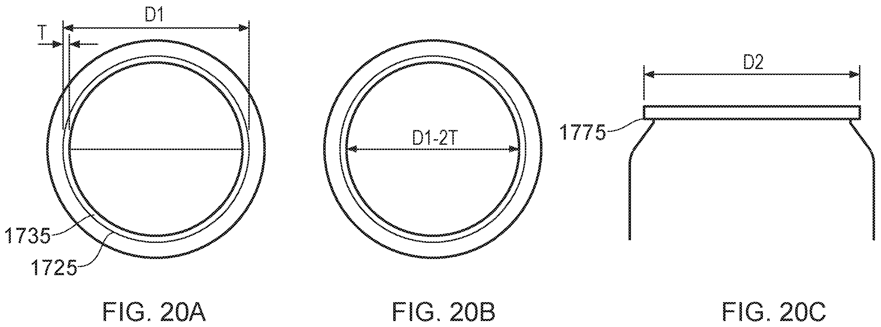

Figure 20A shows a plan view of an upper layer aperture 1725. Also shown are retaining flaps 1735 folded up and through the aperture 1725 (as they are in use) and having a thickness T. This forms an aggregate container receiving aperture diameter represented as D1-2T in Figure 20B.

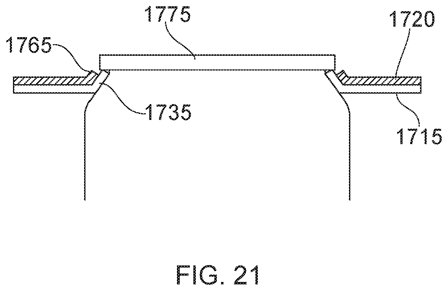

Figure 20C shows a container (in this embodiment being a metal can) with a chime 1775 having a diameter represented as D2. The aggregate diameter D1-2T is less than D2, so that as the carrier is initially applied onto the container the flaps 1735 are bent up and through the aperture 1725 and continued application causes formation of the bent rim 1765, as shown in Figure 21.

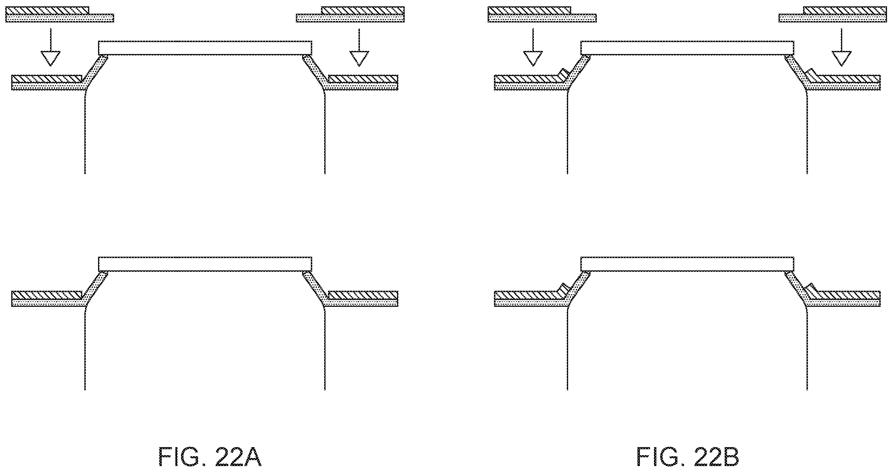

Figures 22A and 22B show a comparison of two scenarios: i) D2 is less than or equal to D1 - 2T, in which case no bent rim is formed; and ii) D2 is greater than D1 - 2T, in which case a reinforcing rim is formed.

Figures and 23 and 24: in order to apply the modified carrier of some embodiments effectively it has been found that a close-fitting pusher plate 1800 is required. Further, in order to prevent the corners of the carrier 1810 deforming during application retaining strips 1860 within the tool hold the carrier, which improves application.

These strips take the form of articulated clamps mounted along each edge of the application head / pusher plate 1800. Prior to picking up the carrier the clamps are in a retracted position. As the individual carrier is picked up from a pre-application stack by the pusher plate, the clamps move and grip the edges of the carrier against the underside of the plate. This provides extra support which acts against the forces created during application, preventing flexing and deformation of the carrier, resulting in a more secure pack. These strips may be profiled to avoid contact with the containers during application. Once applied the retaining strips retract, releasing the applied carrier and allowing the next carrier to be picked up and engaged within the application head; the process is then repeated.

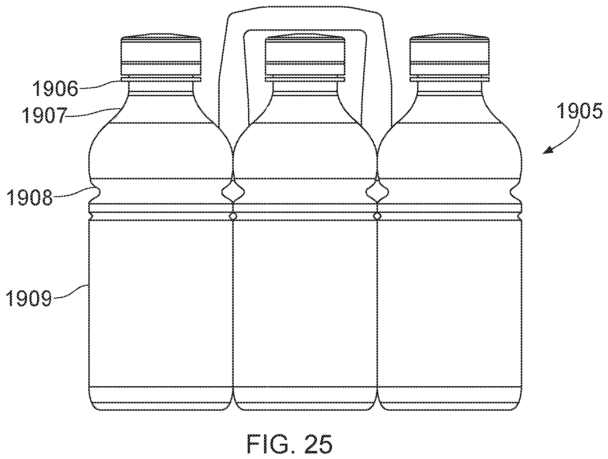

Figure 25 shows a set of containers 1905. Each container 1905 includes a transfer bead 1906, a conical portion 1907 and a waist 1908 formed in a sidewall 1909.

A carrier formed in accordance with the present invention could, for example, be configured to fit under the bead 1906, in which case the diameter of the bead 1906 would be D2. Alternatively a carrier could be configured to fit into the waist 1908, in which case the diameter of the sidewall 1909 would be D2 (the "overdimension" that causes formation of the aperture bent rim).

Although illustrative embodiments of the invention have been disclosed in detail herein, it is understood that the invention is not limited to the precise embodiments shown and that various changes and modifications can be effected therein by one skilled in the art without departing from the scope of the invention as defined in the appended claims.

## Claims

1. A carrier in combination with a plurality of packaging articles of the type having a rim or the like, the carrier comprising a first layer (1620, 1720) having a plurality of circular apertures (1650, 1750) with a diameter D1 and a second layer (1615, 1715) having a plurality of respective locking apertures (1625, 1725), the locking apertures are provided with one or more locking tabs (1635, 1735) which engage under an article rim (1675, 1775), **characterized in that**
aggregate apertures formed by the circular apertures and the locking tab material are smaller than the packaging article rims, with a subtractive aperture diameter of D1 minus twice the thickness T of the locking tabs being less than the diameter D2 of the rims, causing formation of a bent aperture rim (1665, 1765) at the periphery of the circular apertures as the carrier is applied that supports the locking tabs to resist deformation thereof.

2. A combination as claimed in claim 1, in which D1 = D2 - 4T.

3. A combination as claimed in claim 1 or claim 2, in which the first (1620, 1720) and second (1615, 1715) layers are formed separately and are secured or securable together.

4. A combination as claimed in any preceding claim, in which the first (1620, 1720) and second (1615, 1715) layers are adhered, bonded or glued together in advance of application or at the time of application.

5. A combination as claimed in any preceding claim, in which the first (1620, 1720) and second (1615, 1715) layers are formed from the same material or from different materials.

6. A combination as claimed in any preceding claim, in which the apertures (1650, 1750) in the first layer (1620, 1720) provide a fold point for the locking tabs.

7. A combination as claimed in any preceding claim, in which the material of the first (1620, 1720) and second (1615, 1715) layers has a different thickness.

8. A combination as claimed in any preceding claim, in which the first (1620, 1720) and/or second (1615, 1715) layers are formed from cardboard material.

9. A combination as claimed in any preceding claim, in which the first (1620, 1720) and second (1615, 1715) layers are generally rectangular or generally square sheets.

10. A combination as claimed in any preceding claim, further comprising one or more marketing panels formed along one or more sides of the first and/or second layers.

11. A combination as claimed in any preceding claim, further comprising a handle.

12. A combination as claimed in any preceding claim, further comprising a cover film for covering the first layer.

13. A combination as claimed in claim 12, in which the cover film is peelable away from the first layer.

## Patentansprüche

1. Träger in Kombination mit mehreren Verpackungsartikeln des Typs mit einem Rand oder dergleichen, wobei der Träger eine erste Schicht (1620, 1720) mit mehreren kreisförmigen Öffnungen (1650, 1750) mit einem Durchmesser D1 und eine zweite Schicht (1615, 1715) mit mehreren jeweiligen Verriegelungsöffnungen (1625, 1725) umfasst, wobei die Verriegelungsöffnungen mit einer oder mehreren Verriegelungslaschen (1635, 1735) versehen sind, die unter einem Artikelrand (1675, 1775) eingreifen, **dadurch gekennzeichnet, dass** die durch die kreisförmigen Öffnungen und das Verriegelungslaschenmaterial gebildeten aggregierten Öffnungen kleiner sind als die Ränder der Verpackungsartikel, wobei ein subtraktiver Öffnungsdurchmesser von D1 minus dem Doppelten der Dicke T der Verriegelungslaschen kleiner ist als der Durchmesser D2 der Ränder, was Bildung eines gebogenen Öffnungsrands (1665, 1765) am Umfang der kreisförmigen Öffnungen beim Aufbringen des Trägers bewirkt, der die Verriegelungslaschen stützt, um deren Verformung zu widerstehen.

2. Kombination nach Anspruch 1, in der D1 = D2 - 4T ist.

3. Kombination nach Anspruch 1 oder 2, bei der die erste (1620, 1720) und die zweite (1615, 1715) Schicht getrennt gebildet und aneinander befestigt oder zu befestigen sind.

4. Kombination nach einem vorhergehenden Anspruch, bei der die erste (1620, 1720) und die zweite (1615, 1715) Schicht vor Aufbringen oder zum Zeitpunkt des Aufbringens aneinander angehaftet, gebondet oder geklebt werden.

5. Kombination nach einem vorhergehenden Anspruch, wobei die erste (1620, 1720) und die zweite (1615, 1715) Schicht aus demselben Material oder aus verschiedenen Materialien gebildet sind.

6. Kombination nach einem vorhergehenden Anspruch, bei der die Öffnungen (1650, 1750) in der ersten Schicht (1620, 1720) einen Faltpunkt für die Verriegelungslaschen bereitstellen.

7. Kombination nach einem vorhergehenden Anspruch, wobei das Material der ersten (1620, 1720) und zweiten (1615, 1715) Schicht eine verschiedene Dicke aufweist.

8. Kombination nach einem vorhergehenden Anspruch, wobei die erste (1620, 1720) und/oder die zweite (1615, 1715) Schicht aus Kartonmaterial gebildet sind.

9. Kombination nach einem vorhergehenden Anspruch, wobei die erste (1620, 1720) und die zweite (1615, 1715) Schicht im Allgemeinen rechteckige oder im Allgemeinen quadratische Blätter sind.

10. Kombination nach einem vorhergehenden Anspruch, ferner umfassend ein oder mehrere Marketing-Paneele, die entlang einer oder mehreren Seiten der ersten und/oder der zweiten Schicht gebildet sind.

11. Kombination nach einem vorhergehenden Anspruch, ferner einen Griff umfassend.

12. Kombination nach einem vorhergehenden Anspruch, ferner eine Abdeckfolie zum Bedecken der ersten Schicht umfassend.

13. Kombination nach Anspruch 12, bei der die Abdeckfolie von der ersten Schicht weg abziehbar ist.

## Revendications

1. Support en combinaison avec une pluralité d'articles d'emballage du type à rebord ou analogue, le support comprenant une première couche (1620, 1720) ayant une pluralité d'ouvertures circulaires (1650, 1750) d'un diamètre D1 et une deuxième couche (1615, 1715) ayant une pluralité d'ouvertures de blocage respectives (1625, 1725), les ouvertures de blocage étant pourvues d'une ou plusieurs languettes de blocage (1635, 1735) qui s'engagent sous un rebord d'article (1675, 1775), **caractérisé en ce que** des ouvertures globales formées par les ouvertures circulaires et le matériau de languette de blocage sont plus petites que les rebords d'article d'emballage, avec un diamètre d'ouverture soustractif, égal à D1 moins deux fois l'épaisseur T des languettes de blocage, inférieur au diamètre D2 des rebords, ce qui provoque la formation d'un rebord d'ouverture courbé (1665, 1765) à la périphérie des ouvertures circulaires lorsqu'on applique le support qui supporte les languettes de blocage afin de résister à une déformation de celles-ci.

2. Combinaison selon la revendication 1, dans laquelle D1 = D2 - 4T.

3. Combinaison selon la revendication 1 ou la revendication 2, dans laquelle les première (1620, 1720) et deuxième (1615, 1715) couches sont formées séparément et sont attachées ou peuvent être attachées ensemble.

4. Combinaison selon une quelconque revendication précédente, dans laquelle on fait adhérer, on soude ou on colle ensemble les première (1620, 1720) et deuxième (1615, 1715) couches avant l'application ou au moment de l'application.

5. Combinaison selon une quelconque revendication précédente, dans laquelle les première (1620, 1720) et deuxième (1615, 1715) couches sont formées à partir du même matériau ou à partir de matériaux différents.

6. Combinaison selon une quelconque revendication précédente, dans laquelle les ouvertures (1650, 1750) dans la première couche (1620, 1720) fournissent un point de pliage pour les languettes de blocage.

7. Combinaison selon une quelconque revendication précédente, dans laquelle le matériau des première (1620, 1720) et deuxième (1615, 1715) couches a une épaisseur différente.

8. Combinaison selon une quelconque revendication précédente, dans laquelle les première (1620, 1720) et/ou deuxième (1615, 1715) couches sont formées à partir d'un matériau en carton.

9. Combinaison selon une quelconque revendication précédente, dans laquelle les première (1620, 1720) et deuxième (1615, 1715) couches sont des feuilles globalement rectangulaires ou globalement carrées.

10. Combinaison selon une quelconque revendication précédente, comprenant en outre un ou plusieurs panneaux publicitaires formés le long d'un ou plusieurs côtés des première et/ou deuxième couches.

11. Combinaison selon une quelconque revendication précédente, comprenant en outre une poignée.

12. Combinaison selon une quelconque revendication précédente, comprenant en outre un film de revêtement destiné à recouvrir la première couche.

13. Combinaison selon la revendication 12, dans laquelle le film de revêtement peut être détaché de la première couche.
